# EUROPÄISCHE PATENTSCHRIFT

(11) **EP 0 960 559 B1**
(45) Veröffentlichungstag und Bekanntmachung des Hinweises auf die Patenterteilung: **12.11.2003**
(21) Anmeldenummer: 99109478.0
(22) Anmeldetag: 12.05.1999
(51) Int. Cl.: A01D 78/10, A01B 73/04

(54) **Heuwerbungsmaschine**
Haymaking machine
Machine de fenaison

(30) Priorität: 27.05.1998 DE 19823555
(43) Veröffentlichungstag der Anmeldung: 01.12.1999
(73) Patentinhaber: CLAAS Saulgau GmbH, 88340 Bad Saulgau (DE)
(72) Erfinder: Deni, Franz, 88348 Saulgau (DE)

(56) Entgegenhaltungen:
- EP-A- 0 056 118
- EP-A- 0 300 937
- EP-A- 0 385 899
- EP-A- 0 454 602
- EP-A- 0 834 247
- DE-U- 9 100 715

## Beschreibung

Die Erfindung betrifft eine Heuwerbungsmaschine gemäß dem Oberbegriff des Patentanspruchs 1.

Eine solche Maschine ist aus dem Gebrauchsmuster DE-U-9100715 bekannt.

Die Arbeitsorgane derartiger Heuwerbungsmaschinen können von einer Arbeits- in eine Transportstellung und umgekehrt um in Fahrtrichtung verlaufende Achsen verschwenkt werden, so daß die Arbeitsorgane in der Transportstellung quer zur Fahrtrichtung angeordnet sind, wobei auch Ausführungen bekannt sind, deren Arbeitsorgane zusätzlich um vertikale Achsen verschwenkbar sind, so daß sie dann eine in Fahrtrichtung weisende Transportstellung einnehmen. Bei Heuwerbungsmaschinen, deren als Rechkreisel ausgeführten Arbeitsorgane um in Fahrtrichtung verlaufende Achsen verschwenkbar sind, hängt die Lage der Arbeitsorgane in der Transportstellung maßgeblich von der Anzahl der Rechkreisel und deren Größe ab. Umfaßt die Heuwerbungsmaschine bis zu sechs Arbeitsorgane, so sind die mehrteilig ausgeführten und mit den Rechkreiseln versehenen Tragrahmen der Heuwerbungsmaschine in der Transportstellung so angeordnet, daß ihre inneren Rechkreisel annähernd senkrecht stehen und die äußeren Rechkreisel in einen Bereich oberhalb der mittleren, nicht verschwenkten Rechkreisel bewegt worden sind, wobei die beiden äußeren Rechkreisel je nach Ausführungsform oberhalb der inneren Rechkreisel, zwischen diesen oder teilweise oberhalb und zwischen den inneren Rechkreiseln angeordnet sein können. Da der Raum oberhalb der nicht verschwenkbaren mittleren Rechkreisel in horizontaler und vertikaler Richtung beschränkt ist, ist für Heuwerbungsmaschinen mit mehr als sechs Arbeitsorganen gemäß der Europäischen Patentschrift EP 454 602 eine Transportstellung bekannt, in der die inneren und mittleren verschwenkbaren Rechkreisel in annähernd senkrechter Position außerhalb des Mittelrahmens und der diesen Mittelrahmen am Boden abstützenden Laufräder der Heuwerbungsmaschine angeordnet sind und die beiden äußeren verschwenkbaren Rechkreisel in den Bereich oberhalb der nichtverschwenkbaren mittleren Rechkreisel umgeklappt werden. Da der größere Teil der verschwenkbaren Arbeitskreisel außerhalb der Aufstandsfläche der die Heuwerbungsmaschine am Boden abstützenden Räder angeordnet ist, reagiert die Heuwerbungsmaschine in der Transportstellung sehr empfindlich auf Bodenunebenheiten, so daß die Heuwerbungsmaschine eine verstärkte Wankbewegung quer zur Fahrtrichtung ausführt, die einerseits auf der Straße zu Behinderungen des übrigen Verkehrs und beim Transport in unebenen Gelände (Umsetzen auf dem Feld) zum Kippen der Heuwerbungsmaschine führen kann.

Der Erfindung liegt deshalb die Aufgabe zugrunde, eine Heuwerbungsmaschine gemäß dem Oberbegriff des Anspruchs 1 so zu gestalten, daß auf konstruktiv einfache Weise eine die Kippgefahr der Heuwerbungsmaschine in Transportstellung reduzierende Schwerpunktlage erreicht wird.

Erfindungsgemäß wird die Aufgabe durch eine Heuwerbungsmaschine mit den kennzeichnenden Merkmalen des Anspruchs 1 gelöst.

Durch die Verwendung von Rahmenseitenteilen, die eine unterschiedliche Anzahl von Rechkreiseln aufweisen, wird die Möglichkeit geschaffen, eine größere Anzahl Rechkreisel im Bereich der Aufstandsfläche der Laufräder der nicht verschwenkbaren Rechkreisel und teilweise ineinander geschachtelt anzuordnen, so daß in der Transportstellung neben einer geringen Ausdehnung quer zur Fahrtrichtung eine günstigere Schwerpunktlage und damit eine Verringerung der Kippgefahr erreicht wird.

In vorteilhafter Weise sind die einzelnen Rahmenseitenteile mit Kupplungselementen versehen, die es ermöglichen die Seitenteile in beliebeiger Reihenfolge und unabhängig davon ob sie rechtsoder linksseitig an der Heuwerbungsmaschine angeordnet sind miteinander zu verbinden, so daß ein modularer Aufbau erreicht wird.

Die aufeinander abgestimmte Länge der einzelnen Seitenteile und die Anordnung der Rechkreisel auf den jeweiligen Seitenteilen gewährleistet in montiertem Zustand einen konstanten Abstand der einzelnen Rechkreisel zueinander.

Werden die jeweils äußeren Seitenteile in vorteilhafter Weise über ein Koppelglied miteinander verbunden und greift an jedem dieser Koppelglieder ein einenends am nicht verschwenkbaren mittleren Rahmenteil angelenktes Verstellmittel an, kann auf konstruktiv einfache Weise das Verschwenken aller Rechkreisel einer Hälfte der Heuwerbungsmaschine mit nur einem Verstellmittel realisiert werden.

Vorteilhafte Ausgestaltungen sind Gegenstand weiterer Unteransprüche und werden nachfolgend anhand eines in Zeichnungen dargestellten Ausführungsbeispiels näher erläutert.

Es zeigen
- Figur 1: die erfindungsgemäße Heuwerbungsmaschine in der Arbeitsstellung und in Ansicht von oben
- Figur 2: die erfindungsgemäße Heuwerbungsmaschine in der Transportstellung
- Figur 3: die erfindungsgemäße Heuwerbungsmaschine in der Arbeitsstellung und in Ansicht von hinten
- Figur 4: die erfindungsgemäßen Module des Tragrahmens der Heuwerbungsmaschine.

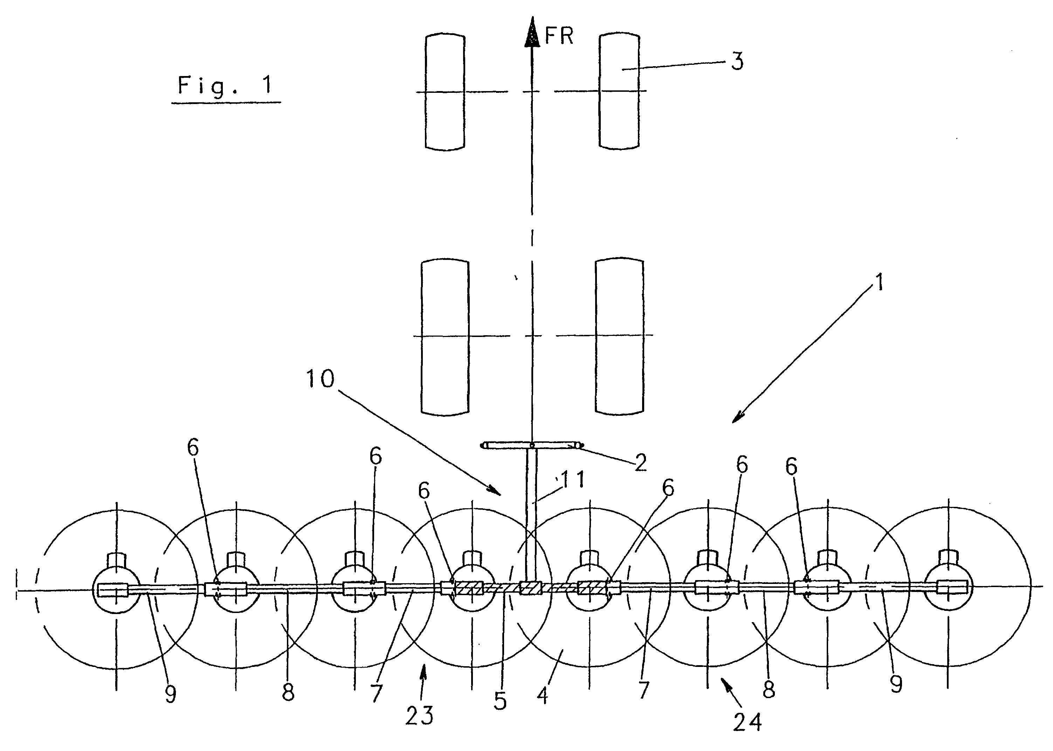

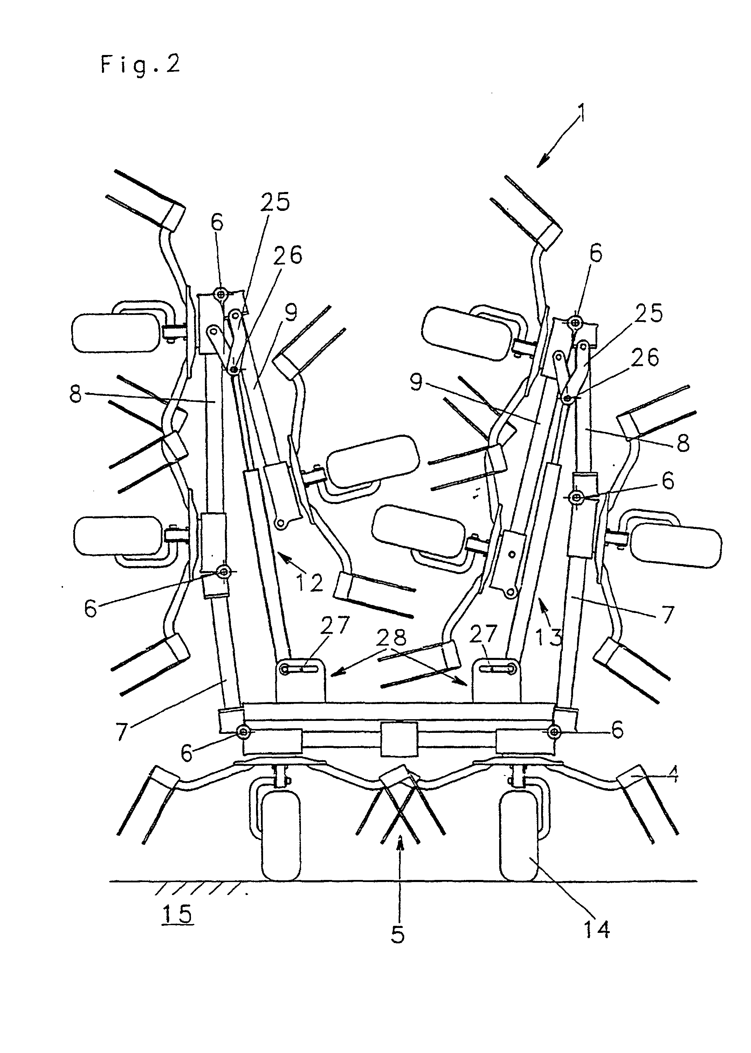

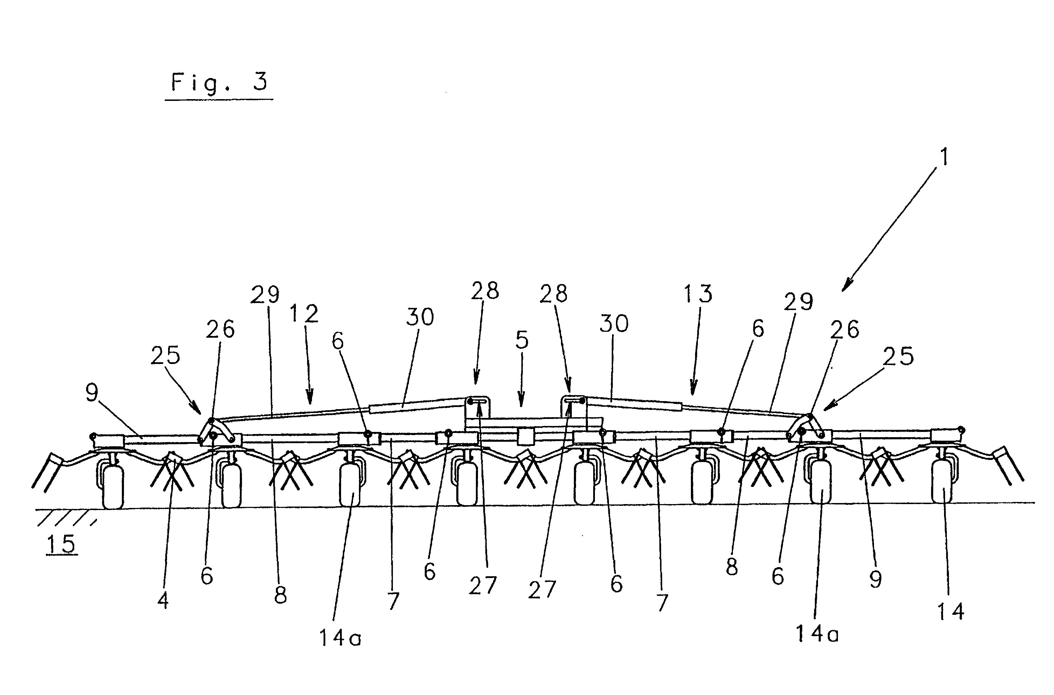

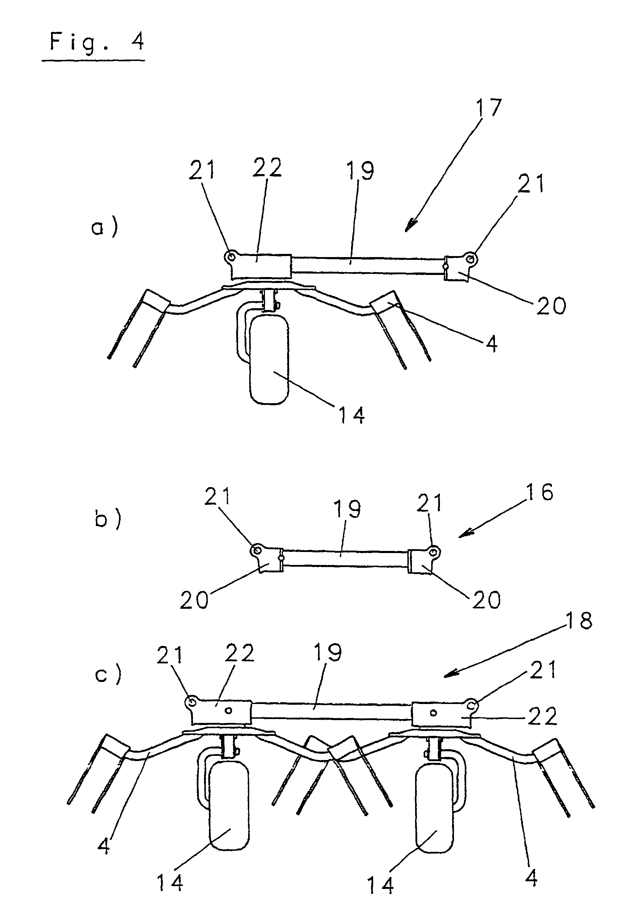

Die in Figur 2 in Transportstellung und in Figur 1 und 3 in Arbeitsstellung dargestellte Heuwerbungsmaschine 1 wird mittels zugfahrzeugseitig angeordneter Aufsatteleinrichtung 2 an einem Zugfahrzeug 3 adaptiert und von diesem gezogen. Der die als Rechkreisel 4 ausgeführten Arbeitsorgane tragende aus einem nicht verschwenkbaren Rahmenmittelteil 5 und um in Fahrtrichtung verlaufende Achsen 6 verschwenkbaren inneren, mittleren und äußeren Seitenrahmen 7, 8, 9 bestehende Tragrahmen 10 ist im Bereich des Rahmenmittelteils 5 mit einem Längsträger 11 verbunden, der anderenends schwenkbar an der Aufsatteleinrichtung 2 befestigt ist. Der Längsträger 11 nimmt an sich bekannte, nicht erfindungswesentliche und deshalb nicht dargestellte mechanische und hydraulische Übertragungsglieder, vorzugsweise Gelenkwellen und Leitungssysteme auf, die die über ebenfalls nicht dargestellte Gelenkwellen und Getriebe miteinander verbundenen Rechkreisel 4 antreiben und die als Hubzylinder 12, 13 ausgeführten Verstellmittel mit einem energieübertragenden Medium versorgen. Die erfindungsgemäß modular aufgebauten inneren, mittleren und äußeren Seitenrahmen 7-9 sind mit einer unterschiedlichen Anzahl Rechkreisel 4 bestückt, wobei sich jeder Rechkreisel 4 durch wenigstens ein Laufrad 14 auf dem Boden 15 abstützt. In Figur 4 sind die Module 16-18 dargestellt, aus denen die inneren, mittleren und äußeren Seitenrahmen 7-9 gebildet werden. Jedes Modul verfügt über einen profilförmigen Stützträger 19, wobei das Profil von beliebigem Querschnitt und geöffnet oder geschlossen ausgeführt sein kann, der in seinem Inneren nicht dargestellte mechanische Übertragungsglieder, vorzugsweise Profilwellen zur Übertragung der am Trägerfahrzeug 3 verfügbaren Antriebsenergie auf die Rechkreisel 4 aufnimmt. Modul 16 verfügt beidendig am Stützträger 19 nur über nicht näher erläuterte ein Drehgelenk 21 aufweisende Kupplungselemente 20, die eine Energieübertragung auch in verschwenkter Lage des Moduls 16 ermöglichen. Der Stützträger 19 des Moduls 17 verfügt einenends über ein ebenfalls mit einem Drehgelenk 21 versehenes Kupplungselement 20 und nimmt anderenends ein an sich bekanntes, einen Rechkreisel 4 antreibendes Getriebe 22 auf, daß an seiner dem gegenüberliegenden Kupplungselement 20 abgewandten Seite ebenfalls über ein Drehgelenk 21 verfügt. Der Stützträger 19 des Moduls 18 verfügt beidendig über ein mit einem Drehgelenk 21 versehenes Getriebe 22, so daß Modul 18 zwei Rechkreisel 4 aufnehmen kann. Die Länge der einzelnen Module 16-18 ist so aufeinander abgestimmt, daß sie so miteinander gelenkig verbindbar sind, daß die Rechkreisel der erfindungsgemäßen Heuwerbungsmaschine 1 einen konstanten Abstand zueinander aufweisen können. Im beschriebenen Ausführungsbeispiel wurde dieser konstante Abstand dadurch erreicht, daß der in Fahrtrichtung FR gesehen linke Teil 23 des Tragrahmens 10 als inneren Seitenrahmen 7 Modul 16, als mittleren Seitenrahmen 8 Modul 18 und als äußeren Seitenrahmen 9 Modul 17 und der rechte Teil 24 des Tragrahmens 10 als inneren Seitenrahmen 7 Modul 17, als mittleren Seitenrahmen 8 Modul 16 und als äußeren Seitenrahmen 9 Modul 18 aufweist. Auf diese Weise tragen die beiden äußeren Seitenrahmen 9 eine unterschiedliche Anzahl von Rechkreiseln 4. Die gelenkige Verbindung der einzelnen Module 16-18 in den Drehgelenken 21 kann im einfachsten Fall durch nicht dargestellte Bolzen erfolgen. Mittlerer und äußerer Seitenrahmen 8, 9 sind zusätzlich über einen zweigliedrigen Koppelmechanismus 25 miteinander verbunden, der anderenends in einem Gelenk 26 das kolbenstangenseitige Ende des Hubzylinders 12, 13 aufnimmt. An seinem zylinderseitigen Ende ist jeder Hubzylinder 12, 13 dreh- und verschiebbar in einem als Langlochschlitz 27 ausgeführten Schubgelenk 28 am Rahmenmittelteil 5 der Heuwerbungsmaschine 1 angelenkt. Diese Verschiebbarkeit der Hubzylinder 12, 13 quer zur Fahrtrichtung FR ermöglicht eine bessere Bodenanpassung der mit wenigstens einem Laufrad 14 den Boden 15 berührenden Rechkreisel 4. Zur Vermeidung des Scharrens der Laufräder 14 bei der durch die Schubgelenke 28 hervorgerufenen bodenanpassungsbedingten Lageänderung der Seitenrahmen 7-9 oder beim Anheben des mit zwei Rechkreiseln 4 versehenen Moduls 18, welches im beschriebenen Ausführungsbeispiel am linksseitigenTeil 23 des Tragrahmens den mittleren Seitenrahmen 8 und am rechtsseitigen Teil 24 des Tragrahmens den äußeren Seitenrahmen 9 bildet, wobei die Laufräder 14 eine quer zur Fahrtrichtung FR gerichtete Scharrbewegung ausführen würden, sind die Laufräder 14 wenigstens teilweise als Nachlaufräder 14a ausgebildet. Die Heuwerbungsmaschine 1 befindet sich in Arbeitsstellung, wenn die Kolbenstange 29 aus dem Kolben 30 herausgeschoben ist. Soll die Heuwerbungsmaschine 1 von der Artbeits- in die Transportstellung verbracht werden, wird jeder Hubzylinder 12, 13 so mit Druck beaufschlagt, daß die Kolbenstange 29 in den Kolben 30 einfährt und dabei über den zweigliedrigen Koppelmechanismus 26 den äußeren Seitenrahmen 9 um mehr als 90° gegen den mittleren Seitenrahmen 8 und über die Drehgelenke 21 den mittleren und den inneren Seitenrahmen 8, 7 um die in Fahrtrichtung verlaufenden Achsen 6 in eine annähernd senkrechte Stellung zum Rahmenmittelteil 5 verschwenkt. In der Transportstellung sind die Rechkreisel 4 der äußeren Seitenrahmen 9 in vertikaler Richtung oberhalb des Rahmenmittelteils 5 so angeordnet, daß die Laufräder 14 der in dieser Stellung benachbarten äußeren Seitenrahmen 9 abwechselnd ineinander greifen und wenigstens drei der Rechkreisel 4 innerhalb der Aufstandsfläche zwischen den Laufrädern 14 des Rahmenmittelteils 5 angeordnet sind. Auf diese Weise wird erfindungsgemäß eine Transportstellung erreicht, die zu einer geringeren Ausdehnung quer zur Fahrtrichtung und zu einer die Wankbewegung der Heuwerbungsmaschine verringernden Schwerpunktlage führt.

### Bezugszeichenliste

- 1: Heuwerbungsmaschine
- 2: Aufsatteleinrichtung
- 3: Zugfahrzeug
- 4: Rechkreisel
- 5: Rahmenmittelteil
- 6: Schwenkachsen
- 7: innerer Seitenrahmen
- 8: mittlerer Seitenrahmen
- 9: äußerer Seitenrahmen
- 10: Tragrahmen
- 11: Längsträger
- 12: Hubzylinder
- 13: Hubzylinder
- 14: Laufrad
- 14a: Nachlaufrad
- 15: Boden
- 16: Modul
- 17: Modul
- 18: Modul
- 19: Stützträger
- 20: Kupplungselement
- 21: Drehgelenk
- 22: Getriebe
- 23: in Fahrtrichtung linker Teil des Tragrahmens
- 24: in Fahrtrichtung rechter Teil des Tragrahmens
- 25: zweigliedriger Koppelmechanismus
- 26: Gelenk
- 27: Langlochschlitz
- 28: Schubgelenk
- 29: Kolbenstange
- 30: Kolben

- FR: Fahrtrichtung

## Patentansprüche

1. Heuwerbungsmaschine mit einer an einem Zugfahrzeug (3) adaptierbaren Aufsatteleinrichtung (2), die das zugfahrzeugseitige Ende des anderenends mit dem Rahmenmittelteil (5) verbundenen Längsträgers (11) des Tragrahmens (10) der Heuwerbungsmaschine (1) schwenkbeweglich aufnimmt und über beidseits am Rahmenmittelteil (5) angebrachte, aus wenigstens einem inneren, mittleren und äußeren Seitenrahmen (7-9) bestehende Seitenteile (23, 24) verfügt, die als Rechkreisel (4) ausgeführte Arbeitsorgane aufweisen, wobei jeder Rechkreisel (4) von wenigstens einem Laufrad (14) auf dem Boden (15) abgestützt wird und die inneren, mittleren und äußeren Seitenrahmen (7-9) über Verstellmittel (12, 13) von einer Arbeits- in eine Transportstellung und umgekehrt um in Fahrtrichtung (FR) verlaufende Achsen (6) verschwenkbar sind, und die einander zugewandten äußeren Rechkreisel (4) in der Transportstellung ineinandergreifend überlappen, **dadurch gekennzeichnet, dass** die inneren, mittleren und äußeren Seitenrahmen (7-9) des linken Seitenteils des Tragrahmens (23) gegenüber denen des rechten Seitenteils des Tragrahmens (24) jeweils eine voneinander verschiedene Anzahl von Rechkreiseln (4) aufweisen.

2. Heuwerbungsmaschine nach Anspruch 1, **dadurch gekennzeichnet, dass** die an den äußeren Seitenrahmen (9) angebrachten Rechkreisel (4) in der Transportstellung in eine teilweise ineinandergeschachtelte Stellung in den Bereich über dem Rahmenmittelteil (5) gelangen.

3. Heuwerbungsmaschine nach einem oder mehreren der vorhergehenden Ansprüche, **dadurch gekennzeichnet, dass** die Anzahl der Rechkreisel (4) der äußeren Seitenrahmen (9), eins oder zwei, die der mittleren Seitenrahmen (8) null oder zwei, die der inneren Seitenrahmen (7) null oder eins beträgt.

4. Heuwerbungsmaschine nach einem oder mehreren der vorhergehenden Ansprüche, **dadurch gekennzeichnet, daß** die Seitenrahmen (7-9) beiderseits Kupplungselemente (20) aufweisen, die eine variable Reihenfolge der Anordnung der Seitenrahmen (7-9) ermöglicht.

5. Heuwerbungsmaschine nach einem oder mehreren der vorhergehenden Ansprüche, **dadurch gekennzeichnet, daß** die eine unterschiedliche Anzahl Rechkreisel (4) aufweisenden Seitenrahmen (7-9) so mit Rechkreiseln (4) bestückt sind, daß deren Kombination mit dem keine Rechkreisel (4) tragenden Seitenrahmen (7, 8) einen konstanten Abstand benachbarter Rechkreisel (4) zueinander ergeben kann.

6. Heuwerbungsmaschine nach einem oder mehreren der vorhergehenden Ansprüche, **dadurch gekennzeichnet, daß** jeweils die null, ein oder zwei Rechkreisel (4) tragenden Seitenrahmen (7-8) jedes Teilrahmens (23, 24) zur Gewährleistung eines modularen Aufbaus gleich ausgeführt sind.

7. Heuwerbungsmaschine nach einem oder mehreren der vorhergehenden Ansprüche, **dadurch gekennzeichnet, daß** jeweils die äußeren und mittleren Seitenrahmen (8, 9) über einen zweigliedrigen Koppelmechanismus (25) miteinander und dieser über ein Verstellmittel (12, 13) mit dem Rahmenmittelteil (5) verbunden ist, so daß bei Druckbeaufschlagung des Verstellmittels (12, 13) die inneren und mittleren Seitenteile (7, 8) um annähemd 90° und die äußeren Seitenteile (9) deutlich über 90° verschwenkt werden.

8. Heuwerbungsmaschine nach einem oder mehreren der vorhergehenden Ansprüche, **dadurch gekennzeichnet, daß** zur Bodenanpassung der mittleren und äußeren Seitenrahmen (8, 9) die Verstellmittel (12, 13) am Rahmenmittelteil (5) in Langlochschlitz-Führungen (27, 28) angelenkt sind.

9. Heuwerbungsmaschine nach einem oder mehreren der vorhergehenden Ansprüche, **dadurch gekennzeichnet, daß** zur Vermeidung des Scharrens der Laufräder (14) bei bodenanpassungsbedingter Lageänderung der Seitenrahmen (7-9) die Laufräder (14) wenigstens teilweise als Nachlaufräder (14a) ausgebildet sind.

## Claims

1. A hay making machine comprising a pivot coupling device (2) which can be adapted to a tractor vehicle (3) and which pivotably movably accommodates the tractor vehicle end of the longitudinal carrier (11), which at the other end is connected to the frame central portion (5), of the carrier frame (10) of the hay making machine (1), and has side portions (23, 24) which are mounted on both sides to the frame central portion (5) and which comprise at least an inner, a central and an outer side frame (7-9) and which have working members in the form of raking rotors (4), wherein each raking rotor (4) is supported on the ground (15) by at least one wheel (14) and the inner, central and outer side frames (7-9) are pivotable by way of displacement means (12, 13) from a working position into a transport position and vice-versa about axes (6) extending in the direction of travel (FR), and the mutually facing outer raking rotors (4) overlap in interengaging relationship in the transport position, **characterised in that** the inner, central and outer side frames (7-9) of the left side portion of the carrier frame (23), in opposite relationship to those of the right side portion of the carrier frame (24), respectively have a mutually different number of raking rotors (4).

2. A hay making machine according to claim 1 **characterised in that** in the transport position the raking rotors (4) mounted to the outer side frames (9) pass into a partially internested position into the region above the frame central portion (5).

3. A hay making machine according to one or more of the preceding claims **characterised in that** the number of raking rotors (4) of the outer side frames (9) is one or two, that of the central side frames (8) is zero or two, and that of the inner side frames (7) is zero or one.

4. A hay making machine according to one or more of the preceding claims **characterised in that** on both sides the side frames (7-9) have coupling elements (20) which permit a variable sequence of the arrangement of the side frames (7-9).

5. A hay making machine according to one or more of the preceding claims **characterised in that** the side frames (7-9) having a different number of raking rotors (4) are so equipped with raking rotors (4) that the combination thereof with the side frame (7, 8) not carrying any raking rotors (7, 8) can afford a constant spacing of adjacent raking rotors (4) relative to each other.

6. A hay making machine according to one or more of the preceding claims **characterised in that** in each case the side frames (7-8) of each sub-frame (23, 24), carrying the zero, one or two raking rotors (4), are of an identical configuration to ensure a modular structure.

7. A hay making machine according to one or more of the preceding claims **characterised in that** in each case the outer and central side frames (8, 9) are connected together by way of a two-member coupling mechanism (25) and same is connected to the frame central portion (5) by way of a displacement means (12, 13) so that upon pressure being applied to the displacement means (12, 13) the inner and central side portions (7, 8) are pivoted through approximately 90° and the outer side portions (9) are pivoted markedly over 90°.

8. A hay making machine according to one or more of the preceding claims **characterised in that** for adaptation to the ground of the central and outer side frames (8, 9) the displacement means (12, 13) are pivotably mounted to the frame central portion (5) in elongate slot guides (27, 28).

9. A hay making machine according to one or more of the preceding claims **characterised in that** to prevent scrabbling of the wheels (14) upon a change in position of the side frames (7-9) caused by adaptation to the ground, the wheels (14) are at least in part in the form of trailing wheels (14a).

## Revendications

1. Machine de fenaison comprenant un dispositif d'attelage (2) adaptable à un tracteur (3), qui reçoit avec possibilité de pivotement l'extrémité côté tracteur d'un longeron (11) du châssis porteur (10) de la machine de fenaison (1), l'autre extrémité du longeron étant reliée à l'élément de châssis (5) médian, des éléments latéraux (23, 24) formés chacun d'au moins un châssis intérieur, un châssis intermédiaire et un châssis extérieur (7-9) étant montés de chaque côté de l'élément de châssis (5) médian et portant des organes de travail sous la forme de râteaux rotatifs (4), chaque râteau rotatif (4) prenant appui sur le sol (15) par au moins une roue porteuse (14), les éléments de châssis intérieur, intermédiaire et extérieur (7-9) pouvant être amenés par des moyens de positionnement (12, 13), par pivotement autour d'axes (6) orientés dans la direction de déplacement (FR), d'une position de travail dans une position de transport et inversement et les râteaux rotatifs (4) extérieurs mutuellement en vis-à-vis s'emboîtant réciproquement dans la position de transport, **caractérisée en ce que** les châssis intérieur, intermédiaire et extérieur (7-9) de l'élément latéral gauche (23) du châssis porteur présentent chacun un nombre de râteaux rotatifs différent de celui de l'élément latéral droit (24) du châssis porteur.

2. Machine de fenaison selon la revendication 1, **caractérisé en ce que** les râteaux rotatifs (4) montés sur les châssis latéraux extérieurs (9), dans la position de transport, sont amenés dans une position d'emboîtement réciproque partiel dans la zone au-dessus de l'élément de châssis (5) médian.

3. Machine de fenaison selon une ou plusieurs des revendications précédentes, **caractérisé en ce que** le nombre de râteaux rotatifs (4) montés sur les châssis latéraux extérieurs (9) est un ou deux, celui sur les châssis latéraux intermédiaires (8) est zéro ou deux, celui sur les châssis latéraux internes (7) est zéro ou un.

4. Machine de fenaison selon une ou plusieurs des revendications précédentes, **caractérisé en ce que** les châssis latéraux (7-9) des deux côtés, présentent des éléments d'accouplement (20) qui permettent de faire varier l'ordre d'agencement des châssis latéraux (7-9).

5. Machine de fenaison selon une ou plusieurs des revendications précédentes, **caractérisé en ce que** les châssis latéraux (7-9) portant un nombre différent de râteaux rotatifs (4), sont équipés avec les râteaux rotatifs (4) d'une manière telle que leur combinaison avec le châssis latéral (7, 8) ne portant pas de râteaux rotatifs (4) donne un espacement constant des râteaux rotatifs (4) voisins.

6. Machine de fenaison selon une ou plusieurs des revendications précédentes, **caractérisé en ce que** les châssis latéraux (7, 8) portant zéro, un ou deux râteaux rotatifs (4) de chaque élément de châssis (23, 24) sont identiques afin d'assurer une construction modulaire.

7. Machine de fenaison selon une ou plusieurs des revendications précédentes, **caractérisé en ce que** les châssis latéraux (8, 9) intermédiaire et extérieur sont reliés entre eux par l'intermédiaire d'un mécanisme de couplage (25) à deux éléments, lui-même relié à l'élément de châssis médian (5) par un moyen de positionnement (12, 13), de manière telle que lorsqu'une pression est appliquée au moyen de positionnement (12, 13), les éléments latéraux (7, 8) intérieur et intermédiaire pivotent d'environ 90° et les éléments latéraux (9) extérieur de plus de 90°.

8. Machine de fenaison selon une ou plusieurs des revendications précédentes, **caractérisé en ce que** pour l'adaptation en fonction du sol des châssis latéraux (8, 9) intermédiaire et extérieur les moyens de positionnement (12, 13) sont articulés sur l'élément de châssis médian (52) dans des moyens de guidage (27, 28) en forme de fente oblongue.

9. Machine de fenaison selon une ou plusieurs des revendications précédentes, **caractérisé en ce que** pour éviter le frottement des roues porteuses lors de changements de position des châssis latéraux (7-9) dus à l'adaptation en fonction du sol, les roues porteuses (14) sont conformées au moins partiellement en roues traînées (14a).
